(19) Europäisches Patentamt
European Patent Office
Office européen des brevets

(11) EP 2 639 448 B1

(12) **EUROPEAN PATENT SPECIFICATION**

(45) Date of publication and mention
of the grant of the patent:
**08.03.2017 Bulletin 2017/10**

(51) Int Cl.:
*F03D 7/04* (2006.01)　　*F03D 7/02* (2006.01)

(21) Application number: **12159727.2**

(22) Date of filing: **15.03.2012**

(54) **Method and arrangement for operating a wind turbine taking into account power losses**

Verfahren und Anordnung für den Betrieb einer Windturbine mit Berücksichtigung der Leistungsverluste

Procédé et dispositif pour utiliser une éolienne en tenant compte des pertes de puissance

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.09.2013 Bulletin 2013/38**

(73) Proprietor: **Siemens Aktiengesellschaft**
**80333 München (DE)**

(72) Inventors:
• **Esbensen, Thomas**
**7400 Herning (DK)**
• **Laurberg, Hans**
**8000 Århus C (DK)**
• **Andersen, Claus**
**7400 Herning (DK)**
• **Hoegh, Gustav**
**7400 Herning (DK)**

(56) References cited:
WO-A2-2010/148062　　US-A1- 2010 133 819
US-A1- 2011 163 544　　US-A1- 2011 204 635
US-B1- 7 679 208

• E.J.P.E. Subiabre ET AL: "Realistic loss modelling and minimisation in an air-cored permanent magnet generator for wind energy applications", 6th IET International Conference on Power Electronics, Machines and Drives (PEMD 2012), 1 January 2012 (2012-01-01), pages D22-D22, XP055291570, DOI: 10.1049/cp.2012.0324 ISBN: 978-1-84919-616-1

**Description**

Field of invention

The present invention is related to a method and to an arrangement for operating, in particular a convertor of, a wind turbine, wherein power loss of at least one energy consuming wind turbine component and in particular also mechanical losses or friction of a drive train and/or electronic losses of a converter associated with switching,is taken into account to adjust the power output of the wind turbine.

Art Background

A method for controlling a wind turbine is shown in US2011204635.

At an output terminal of the wind turbine electrical power is output and fed to a utility grid. In order to operate the wind turbine optimally, the output power is controlled by a wind turbine controller. Thereby, the controller, according to a conventional wind turbine, assumes a fixed relation between the power at different locations from the wind turbine rotor to the output terminal of the wind turbine.

It has been observed that conventional methods are not able in every situation to operate the wind turbine such that maximal power output is ensured, while mechanical and/or electronic loads are in acceptable limits or are reduced. There may be a need for a method and for an arrangement for operating, in particular a converter of, a wind turbine wherein the wind turbine is operated optimally, in particular regarding power production and regarding mechanical and/or electronic loads that the components of the wind turbine are subjected to.

Summary of the Invention

This need may be satisfied by the subject matter of the independent claims. The dependent claims specify particular embodiments of the present invention.

According to an embodiment of the present invention it is provided a method for operating of a wind turbine having a rotor and a wind turbine output terminal connected to a utility grid (or to a wind farm grid or via a wind farm transformer to the utility grid), the method comprising: obtaining an input signal related to an action output of the wind turbine available at a location between the rotor and the wind turbine output terminal; estimating a power related quantity from the input signal; controlling the wind turbine based on the input signal and the estimated power related quantity, wherein in particular the wind turbine has a wind turbine converter having a converter output terminal upstream of the wind turbine output terminal, wherein in particular the estimated power related quantity comprises estimating a power difference of power associated with the action output available at the location and output power at the converter output terminal, and wherein in particular the controlling the wind turbine comprises controlling the wind turbine based on the input signal and the estimated power difference.

Operating the wind turbine may comprise supplying one or more control signals to one or more components of the wind turbine. In particular, one or more control signals may be supplied to a converter of the wind turbine, in particular to an AC-DC-AC converter of the wind turbine. The AC-DC-AC converter may be adapted to convert a variable frequency AC voltage (or power stream) via converting to a DC power stream to a fixed frequency AC voltage (or power stream), having in particular a frequency of 50 Hz or 60 Hz. The converter may in particular comprise one or more power electronic transistors, such as isolated gate bipolar transistors (IGBTs). The transistors may be controlled at respective gates by pulse width modulation signals, which in a fast manner and repetitively switch on and off the plural transistors. Thereby, the power output of the wind turbine, which is output at an output terminal of the converter may be controlled.

In particular, the control signal or control signals supplied to the converter may comprise one or more reference signals, such as a voltage reference signal, a power reference signal, a torque reference signal or the like. Based on (at least one of) these reference signals a processor of the converter may derive the corresponding pulse width modulation signal(s) which are then supplied to the respective transistors comprised within the converter.

Further, operating the wind turbine may comprise supplying one or more control signals to actuators of the wind turbine, such as actuators for adjusting the rotor blade pitch angles. In particular, the method may operate the wind turbine such that for given external conditions, such as wind speed, a maximal power production is ensured, while the load on components of the wind turbine is maintained in acceptable limits. Obtaining the rotational speed signal may comprise measuring the rotational speed of the rotor, of the generator or of any mechanical shaft in between the rotor and the generator. In particular, the rotational speed signal may be indicative also of a rotational speed of the generator.

The intended mechanical rotor power refers to the mechanical power the rotor is intended to deliver, such as to optimize the operation of the rotor, in particular regarding maximal power output and keeping the mechanical load within acceptable limits. A relation between the rotational speed of the rotor (or generator) and the intended mechanical rotor power may be provided such as in the form of one or more curves or one or more tables. In particular, to a given obtained rotational speed of the rotor (or generator) a particular intended mechanical rotor power may be associated. For the given rotational speed of the rotor the associated intended mechanical rotor power represents the mechanical rotor power for which the optimal operation condition is met. Thereby, the optimal relation between the rotational speed of the rotor and the intended mechanical rotor power in a variable-speed operation of a wind turbine may be constant for constant environmental conditions, such as constant air density, constant temperature, but may vary for example for varying air density or varying temperature. In particular, the relation (also referred to as speed-power curve or speed-power relation) may depend on the configuration and constitution of the wind turbine.

In the variable-speed operation the turbine may be controlled in order to maximize its power production, by running the aerodynamics optimally. Hence, an optimal tip-speed ratio should be ensured, i.e. an optimal rotational speed for a given wind speed, which is controlled using the speed-power curve lookup table.

In the constant-speed region and constant-power region, the control objective is not to maximize power production but to keep control of loads and acoustic noise, and (in the constant-speed region) produce as much power as possible while keeping the other constraints.

In contrast to the embodiment of the present invention, in a conventional system, a fixed relationship between a rotational speed of the rotor and an intended electrical power output may have been used, based on which the wind turbine may have been controlled.

In an operating wind turbine, in which the rotor rotates by wind impacting on one or more rotor blades, the mechanical rotor power is transferred via a transmission line to provide an electrical power output at the output terminal of the wind turbine. Thereby, the transmission line may include a drive train, a generator, a converter. During the transferring of the mechanical rotor power to the electrical power output a power loss may occur which may be due to individual power losses and individual power consumptions of different components or processes of the transmission line. In particular, the power loss will cause a reduction of the power associated with the mechanical rotor power such that the electrical power output corresponds to a lower power than the actual mechanical rotor power of the rotor.

In a conventional system the power loss may have been considered, but the power loss may have been assumed to be constant or a function of (such as proportional, linear, nonlinear, affine) the mechanical rotor power. In particular, in a conventional system it may have been assumed that the electrical power output may be derived by the product of an efficiency and the mechanical rotor power. The controlling the wind turbine based on the intended mechanical rotor power and the estimated power loss may improve the efficiency of the wind turbine, while at the same time the mechanical load does not exceed predetermined thresholds.

For estimating the power related quantity (in particular the power loss) the operational state of at least one energy consuming wind turbine component may be taken into account such that the power loss may depend on the operational state of the energy consuming wind turbine component. In particular, it may be taken into account, whether the energy consuming wind turbine component is consuming energy or is not consuming energy. If the energy consuming wind turbine component is consuming energy, the power loss will be larger compared to the case, when the energy consuming wind turbine component is not consuming energy. In particular, the estimated power loss may vary with time due to switching on or off one or more energy consuming wind turbine components. Thus, also the wind turbine may be controlled in a varying manner, such that for example reference values supplied to the wind turbine more in particular to a converter of the wind turbine, may vary in dependence of the operational state of the energy consuming wind turbine component.

According to an embodiment of the present invention wherein the obtaining of the input signal comprises: obtaining a first input signal related to an action output of the wind turbine available at a first location, wherein the first location is between the rotor and the converter output terminal; obtaining a second input signal related to an action output of the wind turbine available at a second location, wherein the second location is between the converter output terminal and the wind turbine output terminal, wherein the estimating the power difference comprises: estimating a first power reduction associated to transferring the action output available at the first location to the converter output terminal; estimating a second power reduction associated to a consumption of energy by a wind turbine component connected at the converter output terminal; and wherein the controlling the converter comprises: controlling the converter based on the first input signal and/or the second input signal and the first estimated power reduction and/or the second estimated power reduction, wherein for estimating the second power reduction an operational state of at least one energy consuming wind turbine component is taken into account.

The energy consuming wind turbine component may for example comprise one or more fans for cooling particular components of the wind turbine, one or more heaters for heating some components of the wind turbine, such as oil of the drive train or a rotor blade for de-icing, one or more actuators, such as an actuator for actuating the rotor blades in order to adjust the rotor blade pitch angle or a yawing actuator in order to rotate a nacelle of the wind turbine around a vertical axis.

According to an embodiment of the present invention during the method the operational state changes from a high energy consuming state to a low energy consuming state or vice versa. For example, if a fan which is running is turned off the operational state of the fan may change from a high energy consuming state to a low energy consuming state. Further, when a fan which is running at a particular high fan speed is switched to a state, in which the fan rotates with a lower fan speed, the fan may change from a high energy consuming state to a low energy consuming state. Further, switching a running heater off may change the state of the heater from a high energy consuming state to a low energy consuming state.

Taking into account and responding to the different levels of energy consumption by the energy consuming wind turbine component may improve the operation of the wind turbine, in particular regarding power improvement or optimization and load optimization.

According to an embodiment of the present invention the method for operating the wind turbine further comprises obtaining an operational state signal indicative of the operational state of the energy consuming wind turbine component, wherein the estimating the second power reduction is further based on the operational state signal.

Obtaining the operational state signal may comprise supplying a state signal from the energy consuming wind turbine component to a controller of the wind turbine, wherein the state signal may be an electrical and/or optical signal or a wireless signal. The operational state signal (or more than one signal, in particular a plurality of operational state signals indicating operational states of a plurality of energy consuming wind turbine components) may be supplied to the wind turbine controller which may process the plural state signal in order to estimate individual energy consumption of the plural energy consuming wind turbine components. The power loss associated with the energy consuming wind turbine components may then be estimated taking into account a sum of the individual power consumptions.

Thereby, the estimating the power loss may be improved, thereby also improving the controlling the wind turbine.

According to an embodiment of the present invention the operational state signal is one of a binary signal and a signal varying, with the energy consumed by the energy consuming wind turbine component. When the operational state signal is a binary signal the binary signal may be multiplied with a predetermined (average) energy consumption or power consumption of the energy consuming wind turbine component. The operational state signal may be multiplied with a constant to derive the energy consumption or power consumption of the respective energy consuming wind turbine component. Thereby, the method may be simplified.

According to an embodiment of the present invention between the rotor and the converter at least one wind turbine component is arranged including at least one of a drive train, in particular mechanically connected to the rotor, an electrical generator, in particular mechanically connected to the drive train, a AC-DC-AC converter, in particular electrically connected to the generator, wherein the estimating the first power reduction (in particular representing a power loss) comprises estimating a component power loss associated with at least one wind turbine component arranged between the rotor and the converter output terminal.

The drive train may comprise a gear box, one or more bearings and all kinds of frictional losses. The drive train may be mechanically connected between the rotor at which plural rotor blades are connected and a generator of the wind turbine. The generator may be an induction generator having in particular a stator with plural coils and a rotating permanent magnet generator rotor. Each of the wind turbine components between the rotor and the converter (these wind turbine components forming the transmission line) may contribute individually according to a particular degree to the power loss. The individual contributions may be estimated by a particular specific physical/mathematical model of the respective wind turbine component. The individual power loss of the wind turbine component is also referred to as component power loss. The individual component power losses may be estimated or derived or computed from a model of the respective wind turbine component. Thereby, estimation of the power loss may be made more accurate and, when used by the wind turbine controller, operation can be optimized/improved.

One or more energy consuming wind turbine components including the energy consuming wind turbine component, the energy consuming wind turbine components including at least one of a fan, a heater, an actuator may be electrically connected to (an output terminal of) the converter. Their power consumption may contribute (such as a sum) to the second power reduction.

According to an embodiment of the present invention the estimating the first power reduction comprises estimating a component power loss according to loss_component = constant * (T_componenent - T_surrounding), wherein loss_component is the power loss of the component, constant is a constant, T_component is the temperature of the component, and T_surrounding is the temperature of the surrounding of the component.

According to an embodiment the estimating the first power reduction comprises estimating a generator power loss associated with the generator which estimated generator power loss depends on a temperature of the generator.

Also taking into account the temperature of the generator for estimating the generator power loss may improve the accuracy of the estimated generator power loss. Further, estimating other component power losses may comprise taking into account the temperature of the respective wind turbine component.

In particular, the power loss may increase with increasing temperature of the respective wind turbine component. In particular, the generator power loss may comprise a term which may be proportional to a square of a generator current times a constant times the generator temperature. Thereby, estimating the power loss may be improved.

According to an embodiment of the present invention the generator power loss is estimated using the relation as an example:

$$loss\_generator = c0 + I^2 * (c1 * T + c2),$$

wherein

loss_generator is the power loss associated with the generator;
c0, c1, c2 are constants;
I is the electrical current flowing through the generator; and
T is the generator temperature.

Thereby, a more detailed physical model is employed which may ensure an even higher accuracy of the estimated generator power loss.

According to an embodiment of the present invention controlling the converter comprises deriving a reference signal, in particular indicative of the reference power, reference torque and/or reference voltage, based on the input signal, in particular the first input signal and/or the second input signal and the estimated power difference, in particular the first power reduction and/or the second power reduction; and supplying the reference signal to the converter.

Thereby, a conventional AC-DC-AC converter of a wind turbine may be adapted to be supplied with a reference power, reference torque and/or reference voltage based on which the converter derives pulse width modulation signal(s) and delivers these pulse width modulation signals to gates of plural transistors comprised within the converter. Thereby, a simple manner of controlling the power output of the wind turbine and thus controlling the operation of the wind turbine is enabled.

According to an embodiment of the present invention the reference signal (such as reference power, reference torque and/or reference voltage) is derived based on a difference between an intended mechanical rotor power and the first estimated power reduction and/or wherein the reference signal is derived based on a sum between an power output at the wind turbine output terminal and the estimated second power reduction.

Thus, a predetermined speed-power curve or graph or table may be used indicating the dependency or relationship between the rotational speed of the rotor (or generator) and the mechanical rotor power.

In particular, the speed-power (or speed-torque) curve may be only applied during variable-speed operation (i. e. for lower wind speeds, i.e. before reaching constant-speed and constant-power operation). As an example Variable-speed operation may comprise wind speed up to 8 m/s; Constant-speed operation may comprise wind speed between 8 and 11 m/s; Constant-power operation comprises wind speed 11 to 25 m/s.

Having derived the intended mechanical rotor power of the rotor for a given rotational speed of the rotor the estimated power loss of the transmission line and energy consuming components are subtracted from the intended mechanical rotor power. Then, this value (being a power reference) is send to the converter. Considering the power losses, this will result that the intended mechanical rotor power is achieved by making the converter power reference as function of the current power losses.

According to an embodiment of the present invention the reference signal is further based on a wind speed. Thereby, the method may still be improved.

According to an embodiment of the present invention the controlling the wind turbine further comprises supplying a blade pitch signal to an actuator for adjusting a blade pitch angle of a rotor blade connected to the rotor. In particular, in a region of relatively high wind speed the blade pitch of the rotor blade may be adjusted in order to maintain a constant power output, such as a nominal power output and a constant rotor speed, such as a nominal rotor speed.

According to an embodiment of the present invention the method comprises operating the wind turbine subsequently in at least one of a first mode, in which the wind speed is in a first (wind speed) interval (or region) and in which in particular the rotational speed is below a rated (or nominal) rotational speed and in which in particular the intended rotor power is below a rated (or nominal) rotor power, a second mode, in which the wind speed is in a second (wind speed) interval comprising higher wind speed than the first interval, and in which in particular the rotational speed is at the rated rotational speed, and in which in particular the intended rotor power is below the rated rotor power, and a third mode, in which the wind speed is in a third (wind speed) interval, comprising higher wind speed than the second interval, and in which in particular the intended rotor power is at the rated rotor power.

Thereby, a simple three mode operational scheme for operating the wind turbine may be provided. In particular, optimal power production of wind turbines at below rated power (rated power output at the wind turbine output terminal) may depend on the ability to apply an optimal pitch angle (the pitch angle is the angle between the blade chord line and the rotor plane of rotation) and track the optimal rotor tip-speed ratio (the ratio of rotor shaft speed to effective wind speed) at below rated rotational speed (of the rotor or the generator). The method may accomplish this by setting a predetermined pitch angle and a generator (or converter) reference power or reference torque or reference voltage, to balance the rotor by aerodynamic torque. Below the rated power the pitch angle may be typically fixed in the variable rotor speed region (within the first wind speed interval) and the power (or torque or voltage) reference may be set as a function of the rotational speed (of the rotor or the generator) (or the wind speed).

In the second wind speed interval, below rated power in the constant rotor speed region the pitch angle may be changed as a function of the power, torque, or wind speed, while the power (or torque or voltage) reference may be adjusted in order to maintain the desired rotational speed.

Within the third wind speed region, i.e. in the third mode, at rated power the torque/power may be maintained, while the pitch angle may be adjusted (in particular varied) to maintain the rated rotational speed.

Thereby, a save and effective and efficient operation of the wind turbine may be ensured.

According to an embodiment of the present invention the pitch angle is fixed during the first mode, wherein the pitch angle is in particular changed based on the intended rotor power and wind speed during the second mode, wherein the pitch angle is further in particular adjusted to maintain the rated rotor power during the third mode. Thereby, a save and efficient operation of the wind turbine may be ensured.

It should be understood that features individually or in any combination disclosed, described, explained or provided for a method for operating a wind turbine may also be applied to an arrangement for operating a wind turbine according to an embodiment of the present invention and vice versa.

According to an embodiment of the present invention it is provided an arrangement for operating of a wind turbine having a rotor, a wind turbine converter and a wind turbine output terminal connected to a utility grid, the converter having a converter output terminal upstream of the wind turbine output terminal, the arrangement comprising: an input terminal for obtaining an input signal related to an action output of the wind turbine available at a location between the rotor and the wind turbine output terminal; a processor adapted to estimate a power difference of power associated with the action output available at the location and output power at the converter output terminal; and to control the converter based on the input signal and the estimated power difference.

The arrangement may be or may not be comprised within a wind turbine controller. The arrangement may be associated with the individual wind turbine. Alternatively, the arrangement may be comprised within a wind park controller controlling a plurality of wind turbines. The processor or the arrangement may further comprise an electronic storage for storing for example configuration values, calibration curves or tables, such as a relationship between rotational speed of the rotor and the intended mechanical rotor power.

Further, different kinds of calibration curves may be stored within the storage of the arrangement. These calibration curves or calibration values may be used for deriving the intended mechanical rotor power and/or for estimating the power loss. Estimating the power loss may also involve receiving one or more state signals from one or more wind turbine components. Controlling the wind turbine may involve supplying one or more reference signals to a converter of the wind turbine.

Embodiments of the present invention are now described with reference to the accompanying drawings. The invention is not limited to the disclosed or illustrated embodiments. The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1    schematically illustrates a wind turbine comprising an arrangement for operating the wind turbine according to an embodiment of the present invention performing a method for operating the wind turbine according to an embodiment of the present invention; and

Fig. 2    illustrates graphs for illustrating a method for operating the wind turbine illustrated in Fig. 1 according to an embodiment of the present invention.

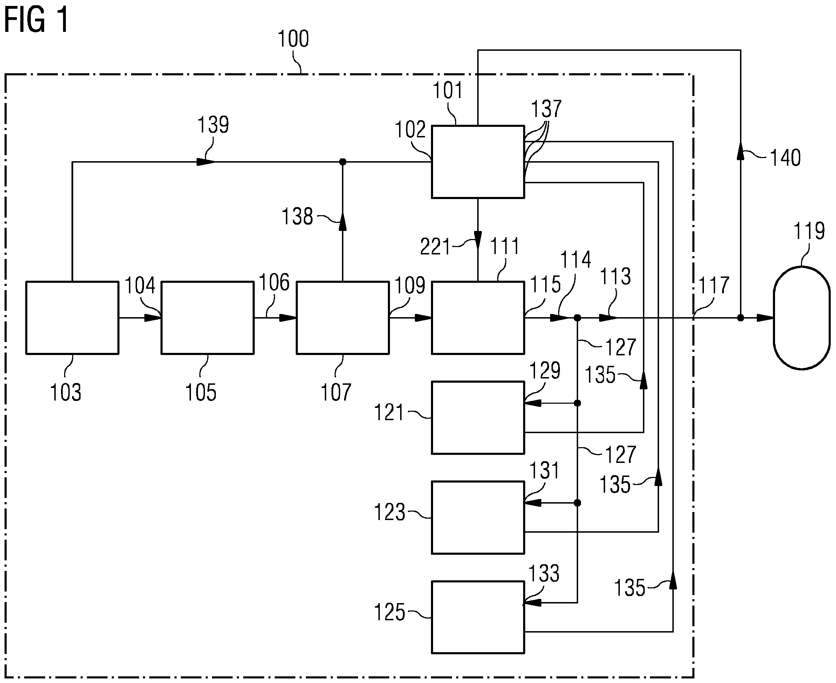

**Fig. 1** illustrates a wind turbine 100 comprising an arrangement 101 for operating the wind turbine according to an embodiment of the present invention. The wind turbine comprises a rotor 103 at which one or more (not illustrated) rotor blades are connected.

The rotor 103 outputs mechanical rotor power 104 and is mechanically connected to a drive train 105 which may for example comprise a gear box, one or more bearing and one or more shafts to which the gear box is mechanically connected. A secondary rotor shaft 106 transfers rotational energy or power to a generator 107 which is adapted to convert the mechanical energy to electrical energy output at an output terminal 109. The electric energy or power is received by a converter 111, which is in the illustrated embodiment a AC-DC-AC converter for converting a variable fixed AC energy stream received from the generator 107 to a fixed frequency AC energy stream 114 output at an output terminal 115 of the converter 111 which may correspond to the output terminal 117 of the wind turbine 100. The energy stream 114, in particular a portion 113, is supplied to the utility grid 119 for supplying the electric energy to one or more consumers. The power 113 supplied to the grid 119 is measured by signal 140 and supplied to the controller 101.

The wind turbine 100 comprises energy consuming wind turbine components 121, 123 and 125, for example. Thereby, the component 121 may for example be a fan, the component 123 may be a heater and the component 125 may be an actuator, for example. More or less energy consuming components may be comprised within the wind turbine 100. The energy consuming components 121, 123, 125 receive electric energy or power from the output power 114 at output terminal 115 of the converter via the power lines 127. Thereby, power 129 is supplied to the component 121, power 131 is supplied to the component 123 and power 133 is supplied to the component 125. These power portions 129, 131, 133 are subtracted from the power stream 114 output at the output terminal 115 of the converter 111, such that the power stream 113 delivered to the grid 119 is the power stream 114 reduced by the power portions 129, 131 and 133 (in sum being related to a second power reduction (ΔP2)).

However, the mechanical rotor power 104 output by the rotor 103 does not equal to the power output stream 114 output by the converter 111, but is higher than the electric output stream 114. In particular, the power output stream 114 output by the converter is smaller than the mechanical rotor power 104 output by the rotor 103 due to power losses within the transmission line comprising the drive train 105, the generator 107 and the converter 111 and due to power consumptions by wind turbine components 121, 123, 125.

For controlling the wind turbine 100 the arrangement 101 is provided which may carry out a method according to an embodiment of the present invention. The arrangement 101 receives state signals 135 from the energy consuming components 121, 123 and 125 in order to obtain information of the operational state of the components 121, 123, 125. In particular, the state signals 135 may indicate whether the components 121, 123, 125 consume energy or not or may even indicate how much energy the components 121, 123, 125 consume or how much power these components consume. The arrangement 101 receives the state signals at input terminals 137.

Further, the arrangement 101 receives at input terminal 102 a rotational speed signal 139 (and/or 138) from the rotor 103 (and/or the generator 107). Alternatively or additionally the rotational speed signal 139 (or another rotation speed signal) may be obtained from the generator 107. Further, the arrangement 101 comprises a storage, such as an electronic storage, in particular a data base, storing or including one or more calibration curves, reference values, reference tables or calibration tables, in particular a speed-power relationship, in particular a table or a curve relating the rotational speed of the rotor (or the generator) to the intended mechanical rotor power 104 of the rotor 103, in order to operate the wind turbine in an effective way, at the same time meeting load limits of mechanical and/or electronic components of the wind turbine.

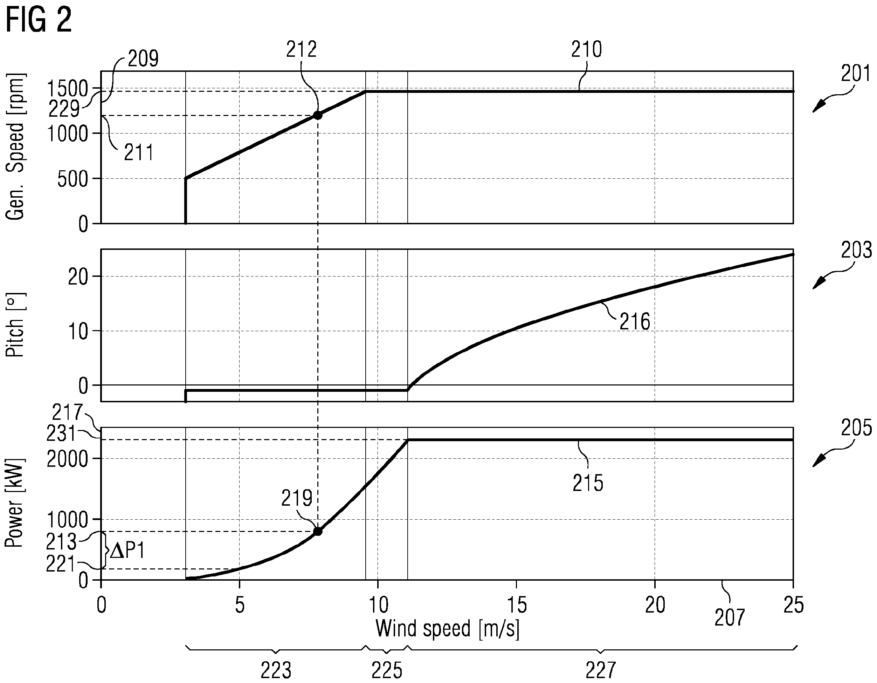

Alternatively to a relationship between the rotational speed of the rotor 103 and the intended mechanical rotor power 104 the arrangement 101 may comprise curves, such as those illustrated in **Fig. 2.**

In the graphs 201, 203, 205 of Fig. 2 the abscissa 207 indicates the wind speed in m/s. The ordinate 209 of the graph 201 indicates the generator speed of the generator, thus the rotational speed signal 138.

As an example, the rotational speed signal 138 may indicate that the generator speed (curve 210) is at about 1200 rpm as indicated by reference sign 211 in the graph 201 in Fig. 2. To this rotational speed 211 of the generator an intended mechanical rotor power 213 is associated. Thereby, this associated intended mechanical rotor power 213 may be obtained by drawing a vertical line from the point 212 in the upper graph 201 in Fig. 2 to the lower graph 205 in Fig. 2 which indicates by a curve 215 the relationship between wind speed and intended mechanical rotor power (104 in Fig. 1) which is denoted at the ordinate 217. By drawing a vertical line from the point 212 (having as Y-coordinate the measured generator speed 211) the point 219 at the curve 215 is intersected, which has as a Y-coordinate the intended mechanical rotor power 213.

From this intended mechanical rotor power 213 an estimated first power reduction Δ**P1** is subtracted in order to derive a reference power 221 which is then supplied to the converter 111, as is apparent from Fig. 1. In particular, the electric output power 114 (power_out) is derived from the mechanical rotor power 104 (power_rotor) according to the following equation:

```
power_out = power_rotor - loss_drive_train - loss_generator -
loss_converter - own_consumption.
```

Thereby, own_consumption may be obtained by the following relationship:

```
own_consumption = fan1_power * fan1_isOn
                + fan2_power * fan2_isOn
                + heaeter1_power * heater1_isOn
                + heaeter2_power * heater2_isOn
                + actuator1_power * actuator1_isOn
                + actuator2_power * actuator2_isOn
                + … + standby_consumption
```

wherein XXX_isOn are binary quantities or may also be real numbers between 0 and 1, for example, reflection the relative amount of energy/power consumption relative to a maximal power consumption.

Graph 203 indicates the rotor pitch angle 216 according to an embodiment.

The method performed by the arrangement 101 is adapted to operate the wind turbine in a first wind interval 223, a second wind interval 225 and a third wind interval 227. Thereby, the second wind interval 225 comprises wind speeds which are higher than the wind speeds comprised in the first wind interval 223 and the third wind interval 227 comprises wind speeds which are higher than the wind speeds in the second wind speed interval 225.

In the first wind interval 223 the generator speed is below the rated or nominal generator speed 229. In the wind interval 225 and 227 the wind turbine is operated at the nominal generator speed 229. In the first wind speed interval 223 and also the second wind speed interval 225 the intended mechanical rotor power 215 is below the nominal mechanical rotor power 231 and increases from zero to the nominal mechanical rotor power which is indicated with reference sign 231. In the third wind speed interval 227 the mechanical rotor power stays at the nominal mechanical rotor power 231. In the graph 201 the generator speed is indicated by curve 210.

In the first wind speed interval 223 (from about 3-9 m/s) the objective may be to maximize the power production. This is done following a speed-power curve, i.e. the controller 101 sends a power (or torque) reference to the converter 111 as a function of the measured rotational speed 210 of the generator (i.e. the generator speed 210) or the rotational speed of the rotor. Using the proposed method according to the embodiment of the present invention the power reference 221 will be the rotor power 213 reduced by the power loss ΔP. Thereby, the efficiency of the rotor may be optimized and thus the turbine may be optimized regarding power output.

In the third wind speed interval 227 (from 10 m/s to higher wind speeds) the objective may be to limit the power production to maintain the power production at the rated power 231. Limitation of the power production may be performed to reduce loads of the wind turbine components. In this region 227 the power limit may be the power at any of the components. In the third wind interval 227 the component that limits the power output may e.g. a gear box, such as a gear box included in the drive train 105 in Fig. 1. According to an embodiment the power at the gearbox is used as a limiting factor of not the grid connection point (such as output terminal 117).

The method according to an embodiment of the present invention performed by the controller or arrangement 101 according to an embodiment of the present invention may produce more power in the wind speed interval 223. A conventional controller may assume a certain (fixed) loss and own consumption of the turbine, but turning a fan on, heater, deicing system on, will change the own consumption of the wind turbine (for example by the components 121, 123, 125 illustrated in Fig. 1), which may directly impact the counter-torque applied to the rotor 103 (since the converter 111 will have to deliver this extra power), which is sub-optimal.

The method according to an embodiment of the present invention produces more power in the third wind speed interval 227 and/or it reduces turbine loading in this interval. A conventional controller may have a fixed rated power in the third wind speed interval 227 and has to assume certain component power consumption and losses. However, by evaluating the real consumption of power and estimate the losses the following advantages may be achieved:

Increase of output power in the third region 227 for low power consumption; this may result in performance increase.

Decrease output power in the third wind speed interval for high power consumption in order to not overload mechanical and/or electrical components.

The generator power loss (loss_generator) may be estimated using the following relation:

$$loss\_generator = c0 + I^2 * (c1 * T + c2),$$

wherein

loss_generator is the power loss associated with the generator;
c0, c1, c2 are constants;
I is the electrical current flowing through the generator; and
T is the generator temperature.

Thereby, the estimation of the generator power loss takes also into account the generator temperature T.

Embodiments of the present invention may result in smaller loads. In contrast, a conventional controller reacts on changes in the turbines own power consumption which may result in unnecessary control action and increased loading.

The new arrangement and new method according to embodiments of the present invention may improve the insight in the turbine performance. Further, the efficiency of components and the own power consumption (of the wind turbine) may be related to the ambient temperature or operating temperature of the respective component. By having temperature depending controller settings the operation may be at least partially optimized. Some turbines may use torque control instead of power control or voltage control, wherein this control function may also be performed by the method according to an embodiment of the present invention.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for operating of a wind turbine (100) having a rotor (103), a generator (107) and a wind turbine converter (111) having a converter output terminal (115) upstream of a wind turbine output terminal (117) being connected to a utility grid, the method comprising:

   obtaining a first input signal (138,139, 211) related to an action output of the wind turbine available at a first location, wherein the first location is between the rotor and the converter output terminal (115), the first input signal (138,139, 211) being indicative of a rotational speed of the generator (107)
   estimating a first power reduction ($\Delta$P1) associated to transferring the action output available at the first location to the converter output terminal (115),
   deriving an intended mechanical rotor power (213) of the rotor for the given rotational speed of the rotor as indicated by the first input signal (138,139, 211) by using a predetermined speed-power curve or graph (201, 205) or table indicating a dependency or relationship between the rotational speed (210) of the rotor or generator and the intended mechanical rotor power 213;
   deriving a reference signal (221) based on a difference between the intended mechanical rotor power (213) and the estimated first power reduction ($\Delta$P1); **characterized in that** the reference signal (221) is supplied to the converter (111) thereby controlling the converter, wherein, based on the reference signal, a processor of the converter derives the corresponding pulse width modulation signal(s) which are then supplied to transistors comprised within the converter.

2. Method according to claim 1, further comprising:

   obtaining a second input signal (140) related to an action output of the wind turbine available at a second location, wherein the second location is between the converter output terminal and the wind turbine output terminal;
   estimating a second power reduction ($\Delta$P2) associated to a consumption of energy (129, 131, 133) by a wind turbine component (121, 123, 125) connected at the converter output terminal (115),

   wherein the controlling the converter further comprises:

   controlling the converter (111) based on the second input signal and the estimated second power reduction ($\Delta$P2),

   wherein for estimating the second power reduction ($\Delta$P2) an operational state (135) of at least one energy consuming wind turbine component (121, 123, 125) is taken into account.

3. Method according to claim 2, wherein the operational state changes from a high energy consuming state to a low energy consuming state or vice versa.

4. Method according to one of claims 2 to 3, further comprising:

obtaining an operational state signal (135) indicative of the operational state of the energy consuming wind turbine component (121, 123, 125),

wherein the estimating the second power reduction is further based on the operational state signal.

5. Method according to claim 4, wherein the operational state signal (121, 123, 125) is one of a binary signal and a signal varying, in particular linearly, with the energy consumed by the energy consuming wind turbine component.

6. Method according to one of the preceding claims, wherein between the rotor and the converter at least one wind turbine component (105, 107, 111) is arranged including a drive train (105), in particular mechanically connected to the rotor, wherein in particular the estimating the first power reduction comprises estimating a component power loss associated with at least one wind turbine component arranged between the rotor and the converter output terminal.

7. Method according to one of the preceding claims, wherein the estimating the first power reduction comprises estimating a component power loss as function of the temperature difference between the component and the surroundings, in particular according to

$$\text{loss\_component = constant * (T\_component - T\_surrounding),}$$

wherein

loss_component is the power loss of the component,
constant is a constant,
T_component is the temperature of the component, and
T_surrounding is the temperature of the surrounding of the component.

8. Method according to one of the preceding claims, wherein the estimating the first power reduction comprises estimating a generator power loss associated with the generator which estimated generator power loss depends on a temperature (T) of the generator (107),
wherein in particular the generator power loss is estimated as function of the component temperature and/or the electric current flow, in particular using the relation:

$$\text{loss\_generator = c0 + I}^2 \text{ * (c1 * T + c2),}$$

wherein

loss_generator is the power loss associated with the generator;
c0, c1, c2 are constants;
I is the electrical current flowing through the generator; and
T is the generator temperature.

9. Method according to one of claims 2 to 8, wherein deriving the reference signal (221) comprises deriving a reference signal (221) indicative of the reference power, reference torque and/or reference voltage, based on the second input signal and the second power reduction.

10. Method according to claim 9,
wherein the reference signal is derived further based on a sum between an power output (113) at the wind turbine output terminal (117) and the estimated second power reduction (ΔP2).

11. Method according to claim 9 or 10, wherein the reference signal is further based on a wind speed (207).

**12.** Method according to one of the preceding claims, wherein operating the wind turbine further comprises supplying a blade pitch signal to an actuator (125) for adjusting a pitch angle of a rotor blade connected to the rotor.

**13.** Method according to one of the preceding claims, further comprising operating the wind turbine subsequently in at least one of
a first mode, in which the wind speed is in a first interval (223) and in which in particular the rotational speed is below a rated rotational speed (229) and in which in particular the intended rotor power is below a rated rotor power (217), a second mode, in which the wind speed is in a second interval (225) comprising higher wind speed than the first interval, and in which in particular the rotational speed is at the rated rotational speed (229), and in which in particular the intended rotor power is below the rated rotor power (217), and
a third mode, in which the wind speed is in a third interval (227), comprising higher wind speed than the second interval, and in which in particular the intended rotor power is at the rated rotor power (217).

**14.** Method according to claim 13, wherein the pitch angle is fixed during the first mode, wherein the pitch angle is in particular changed based on the intended rotor power and wind speed during the second mode, wherein the pitch angle is further in particular adjusted to maintain the rated rotor power during the third mode.

**15.** Arrangement for operating of a wind turbine (100) having a rotor (103), a generator (107), a wind turbine converter (111) and a wind turbine output terminal connected to a utility grid, the converter having a converter output terminal (115) upstream of the wind turbine output terminal (117), the arrangement comprising:

an input terminal for obtaining a first input signal (138,139,211) related to an action output of the wind turbine available at a first location between the rotor and the wind turbine converter output terminal (115);
a processor adapted
to carry out a method according to one of the preceding claims.


## Patentansprüche

**1.** Verfahren für den Betrieb einer Windturbine (100) mit einem Rotor (103), einem Generator (107) und einem Windturbinenumrichter (111), der einen Umrichterausgangsanschluss (115) aufweist, der einem Windturbinen-Ausgangsanschluss (117) vorgeschaltet ist, der mit einem Versorgungsnetz verbunden ist, wobei das Verfahren umfasst:

Gewinnen eines ersten Eingangssignals (138, 139, 211), das einen Aktionsausgang der Windturbine betrifft, der an einem ersten Ort verfügbar ist, wobei sich der erste Ort zwischen dem Rotor und dem Umrichterausgangsanschluss (115) befindet, wobei das erste Eingangssignal (138, 139, 211) eine Drehzahl des Generators (107) anzeigt;
Schätzen einer ersten Leistungsreduzierung ($\Delta$P1), die mit dem Übertragen des an dem ersten Ort verfügbaren Aktionsausgangs zu dem Umrichterausgangsanschluss (115) zusammenhängt;
Ableiten einer beabsichtigten mechanischen Rotorleistung (213) des Rotors für die gegebene Drehzahl des Rotors, die durch das erste Eingangssignal (138, 139, 211) angegeben ist, unter Verwendung einer vorbestimmten Drehzahl-Leistungs-Kurve oder eines Diagramms (201, 205) oder einer Tabelle, die eine Abhängigkeit oder Beziehung zwischen der Drehzahl (210) des Rotors oder Generators und der beabsichtigten mechanischen Rotorleistung (213) angibt;
Ableiten eines Referenzsignals (221) basierend auf einer Differenz zwischen der beabsichtigten mechanischen Rotorleistung (213) und der geschätzten ersten Leistungsreduzierung ($\Delta$P1);

**dadurch gekennzeichnet, dass** das Referenzsignal (221) dem Umrichter (111) zugeführt wird, wodurch der Umrichter gesteuert wird, wobei, basierend auf dem Referenzsignal, ein Prozessor des Umrichters das (die) entsprechende(n) Pulsweitenmodulationssignal(e) ableitet, welche(s) dann Transistoren zugeführt wird (werden), die in dem Umrichter enthalten sind.

**2.** Verfahren nach Anspruch 1, welches ferner umfasst:

Gewinnen eines zweiten Eingangssignals (140), das einen Aktionsausgang der Windturbine betrifft, der an einem zweiten Ort verfügbar ist, wobei sich der zweite Ort zwischen dem Umrichterausgangsanschluss und dem Windturbinen-Ausgangsanschluss befindet;
Schätzen einer zweiten Leistungsreduzierung ($\Delta$P2), die mit einem Verbrauch von Energie (129, 131, 133) durch eine Windturbinenkomponente (121, 123, 125) zusammenhängt, die mit dem Umrichterausgangsanschluss (115) verbunden ist,

wobei das Steuern des Umrichters ferner umfasst:

Steuern des Umrichters (111) basierend auf dem zweiten Eingangssignal und der geschätzten zweiten Leistungsreduzierung (ΔP2),

wobei zum Schätzen der zweiten Leistungsreduzierung (ΔP2) ein Betriebszustand (135) wenigstens einer Energie verbrauchenden Windturbinenkomponente (121, 123, 125) berücksichtigt wird.

3. Verfahren nach Anspruch 2, wobei sich der Betriebszustand von einem Zustand des hohen Energieverbrauchs zu einem Zustand des niedrigen Energieverbrauchs ändert, oder umgekehrt.

4. Verfahren nach einem der Ansprüche 2 bis 3, welches ferner umfasst:

Gewinnen eines Betriebszustandssignals (135), das den Betriebszustand der Energie verbrauchenden Windturbinenkomponente (121, 123, 125) anzeigt,

wobei das Schätzen der zweiten Leistungsreduzierung ferner auf dem Betriebszustandssignal basiert.

5. Verfahren nach Anspruch 4, wobei das Betriebszustandssignal (121, 123, 125) entweder ein binäres Signal ist, oder ein Signal, das sich, insbesondere linear, mit der Energie ändert, die von der Energie verbrauchenden Windturbinenkomponente verbraucht wird.

6. Verfahren nach einem der vorhergehenden Ansprüche, wobei zwischen dem Rotor und dem Umrichter wenigstens eine Windturbinenkomponente (105, 107, 111) angeordnet ist, die einen Antriebsstrang (105) aufweist, der insbesondere mechanisch mit dem Rotor verbunden ist, wobei insbesondere das Schätzen der ersten Leistungsreduzierung das Schätzen eines Komponenten-Leistungsverlustes umfasst, der mit wenigstens einer Windturbinenkomponente zusammenhängt, die zwischen dem Rotor und dem Umrichterausgangsanschluss angeordnet ist.

7. Verfahren nach einem der vorhergehenden Ansprüche, wobei das Schätzen der ersten Leistungsreduzierung das Schätzen eines Komponenten-Leistungsverlustes als Funktion der Temperaturdifferenz zwischen der Komponente und der Umgebung umfasst, insbesondere gemäß

$$\text{Verlust\_Komponente} = \text{constant} * (\text{T\_Komponente} - \text{T\_Umgebung}),$$

wobei

Verlust_Komponente der Leistungsverlust der Komponente ist, constant eine Konstante ist,
T_Komponente die Temperatur der Komponente ist und
T_Umgebung die Temperatur der Umgebung der Komponente ist.

8. Verfahren nach einem der vorhergehenden Ansprüche, wobei das Schätzen der ersten Leistungsreduzierung das Schätzen eines mit dem Generator zusammenhängenden Generator-Leistungsverlustes umfasst, wobei dieser geschätzte Generator-Leistungsverlust von einer Temperatur (T) des Generators (107) abhängt,
wobei insbesondere der Generator-Leistungsverlust als Funktion der Komponententemperatur und/oder des elektrischen Stromflusses geschätzt wird, insbesondere unter Verwendung der Beziehung

$$\text{Verlust\_Generator} = c0 + I^2 * (c1 * T + c2),$$

wobei

Verlust_Generator der mit dem Generator zusammenhängende Leistungsverlust ist;
c0, c1, c2 Konstanten sind;

I der durch den Generator fließende elektrische Strom ist; und

T die Generatortemperatur ist.

9. Verfahren nach einem der Ansprüche 2 bis 8, wobei das Ableiten des Referenzsignals (221) das Ableiten eines Referenzsignals (221), das die Referenzleistung, das Referenzdrehmoment und/oder die Referenzspannung angibt, basierend auf dem zweiten Eingangssignal und der zweiten Leistungsreduzierung umfasst.

10. Verfahren nach Anspruch 9, wobei das Referenzsignal ferner basierend auf einer Summe eines Leistungsausgangs (113) an dem Windturbinen-Ausgangsanschluss (117) und der geschätzten zweiten Leistungsreduzierung (ΔP2) abgeleitet wird.

11. Verfahren nach Anspruch 9 oder 10, wobei das Referenzsignal ferner auf einer Windgeschwindigkeit (207) basiert.

12. Verfahren nach einem der vorhergehenden Ansprüche, wobei das Betreiben der Windturbine ferner das Zuführen eines Rotorblatt-Anstellwinkelsignals zu einem Stellantrieb (125) zum Einstellen eines Anstellwinkels eines mit dem Rotor verbundenen Rotorblattes umfasst.

13. Verfahren nach einem der vorhergehenden Ansprüche, welches ferner das Betreiben der Windturbine nacheinander in wenigstens einer von folgenden Betriebsarten umfasst:

einer ersten Betriebsart, in welcher die Windgeschwindigkeit in einem ersten Intervall (223) liegt und in welcher insbesondere die Drehzahl unter einer Bemessungsdrehzahl (229) liegt und in welcher insbesondere die beabsichtigte Rotorleistung unter einer Bemessungs-Rotorleistung (217) liegt,
einer zweiten Betriebsart, in welcher die Windgeschwindigkeit in einem zweiten Intervall (225) liegt, das höhere Windgeschwindigkeiten als das erste Intervall umfasst, und in welcher insbesondere die Drehzahl bei der Bemessungsdrehzahl (229) liegt, in welcher insbesondere die beabsichtigte Rotorleistung unter der Bemessungs-Rotorleistung (217) liegt, und
einer dritten Betriebsart, in welcher die Windgeschwindigkeit in einem dritten Intervall (227) liegt, das höhere Windgeschwindigkeiten als das zweite Intervall umfasst, und in welcher insbesondere die beabsichtigte Rotorleistung bei der Bemessungs-Rotorleistung (217) liegt.

14. Verfahren nach Anspruch 13, wobei der Anstellwinkel während der ersten Betriebsart fest ist, wobei der Anstellwinkel während der zweiten Betriebsart insbesondere basierend auf der beabsichtigten Rotorleistung und der Windgeschwindigkeit geändert wird, wobei der Anstellwinkel ferner während der dritten Betriebsart insbesondere verstellt wird, um die Bemessungs-Rotorleistung aufrechtzuerhalten.

15. Anordnung für den Betrieb einer Windturbine (100) mit einem Rotor (103), einem Generator (107), einem Windturbinenumrichter (111) und einem Windturbinen-Ausgangsanschluss, der mit einem Versorgungsnetz verbunden ist, wobei der Umrichter einen Umrichterausgangsanschluss (115) aufweist, der dem Windturbinen-Ausgangsanschluss (117) vorgeschaltet ist, wobei die Anordnung umfasst:

einen Eingangsanschluss zum Gewinnen eines ersten Eingangssignals (138, 139, 211), das einen Aktionsausgang der Windturbine betrifft, der an einem ersten Ort zwischen dem Rotor und dem Ausgangsanschluss (115) des Windturbinenumrichters verfügbar ist;
einen Prozessor, der dafür ausgelegt ist, ein Verfahren nach einem der vorhergehenden Ansprüche auszuführen.

**Revendications**

1. Procédé de fonctionnement d'une turbine éolienne (100) comportant un rotor (103), un générateur (107) et un convertisseur de turbine éolienne (111) ayant une borne de sortie de convertisseur (115) en amont d'une borne de sortie de turbine d'éolienne (117) connectée à un réseau électrique, le procédé comprenant de :

obtenir un premier signal d'entrée (138, 139, 211) lié à une sortie d'action de la turbine éolienne disponible au niveau d'un premier emplacement, dans lequel le premier emplacement se situe entre le rotor et la borne de sortie de convertisseur (115), le premier signal d'entrée (138, 139, 211) indiquant une vitesse de rotation du générateur (107) ;

estimer une première réduction de puissance (ΔP1) associée au transfert de la sortie d'action disponible au niveau du premier emplacement vers la borne de sortie de convertisseur (115),

dériver une puissance de rotor mécanique prévue (213) du rotor pour la vitesse de rotation donnée du rotor telle qu'indiquée par le premier signal d'entrée (138, 139, 211) en utilisant une courbe ou un graphique de vitesse-puissance prédéterminé (201, 205) ou un tableau indiquant une dépendance ou une relation entre la vitesse de rotation (210) du rotor ou du générateur et la puissance de rotor mécanique prévue (213) ;

dériver un signal de référence (221) sur la base d'une différence entre la puissance de rotor mécanique prévue (213) et la première réduction de puissance estimée (ΔP1) ;

**caractérisé en ce que** le signal de référence (221) est fourni au convertisseur (111), commandant ainsi le convertisseur, dans lequel, sur la base du signal de référence, un processeur du convertisseur dérive le ou les signaux de modulation de largeur d'impulsion correspondants qui sont ensuite fournis à des transistors compris dans le convertisseur.

2.  Procédé selon la revendication 1, comprenant en outre de :

> obtenir un second signal d'entrée (140) lié à une sortie d'action de la turbine éolienne disponible au niveau d'un second emplacement, dans lequel le second emplacement se situe entre la borne de sortie de convertisseur et la borne de sortie de turbine éolienne ;
>
> estimer une seconde réduction de puissance (ΔP2) associée à une consommation d'énergie (129, 131, 133) par un composant de turbine éolienne (121, 123, 125) connecté à la borne de sortie de convertisseur (115), dans lequel la commande du convertisseur comprend en outre de :
>
> > commander le convertisseur (111) sur la base du second signal d'entrée et de la seconde réduction de puissance estimée (ΔP2),
> >
> > dans lequel, pour estimer la seconde réduction de puissance (ΔP2), un état opérationnel (135) d'au moins un composant de turbine éolienne consommateur d'énergie (121, 123, 125) est pris en compte.

3.  Procédé selon la revendication 2, dans lequel l'état opérationnel passe d'un état de forte consommation d'énergie à un état de faible consommation d'énergie ou vice versa.

4.  Procédé selon l'une des revendications 2 à 3, comprenant en outre de :

> obtenir un signal d'état opérationnel (135) indiquant l'état opérationnel du composant de turbine éolienne consommateur d'énergie (121, 123, 125),
>
> dans lequel l'estimation de la seconde réduction de puissance est en outre basée sur le signal d'état opérationnel.

5.  Procédé selon la revendication 4, dans lequel le signal d'état opérationnel (121, 123, 125) est l'un d'un signal binaire et d'un signal variant, en particulier linéairement, avec l'énergie consommée par le composant de turbine éolienne consommateur d'énergie.

6.  Procédé selon l'une des revendications précédentes, dans lequel, entre le rotor et le convertisseur, est agencé au moins un composant de turbine éolienne (105, 107, 111) comprenant un train d'entraînement (105), relié, en particulier, mécaniquement au rotor, dans lequel, en particulier, l'estimation de la première réduction de puissance comprend d'estimer une perte de puissance de composant associée à au moins un composant de turbine éolienne agencé entre le rotor et la borne de sortie de convertisseur.

7.  Procédé selon l'une des revendications précédentes, dans lequel l'estimation de la première réduction de puissance comprend de :

> estimer une perte de puissance de composant en fonction de la différence de température entre le composant et l'environnement, en particulier selon

```
perte_composant    =    constante    *    (T_composant    -
T_environnement),
```

> où

perte_composant est la perte de puissance du composant,

constante est une constante,

T_composant est la température du composant, et

T_environnement est la température de l'environnement du composant.

8. Procédé selon l'une des revendications précédentes, dans lequel l'estimation de la première réduction de puissance comprend d'estimer une perte de puissance de générateur associée au générateur, laquelle perte de puissance de générateur estimée dépend d'une température (T) du générateur (107),

dans lequel, en particulier, la perte de puissance de générateur est estimée en particulier en fonction de la température du composant et/ou de la circulation de courant électrique, en particulier en utilisant la relation :

$$\text{perte\_générateur} = c0 + I^2 * (c1 * T + c2),$$

où

perte_générateur est la perte de puissance associée au générateur ;

c0, c1, c2 sont des constantes ;

I est le courant électrique circulant à travers le générateur ; et

T est la température du générateur.

9. Procédé selon l'une des revendications 2 à 8, dans lequel la dérivation du signal de référence (221) comprend de dériver un signal de référence (221) indiquant la puissance de référence, le couple de référence et/ou la tension de référence, sur la base du second signal d'entrée et de la seconde réduction de puissance.

10. Procédé selon la revendication 9,

dans lequel le signal de référence est dérivé en outre sur la base d'une somme entre une sortie de puissance (113) au niveau de la borne de sortie de turbine éolienne (117) et la seconde réduction de puissance estimée ($\Delta$P2).

11. Procédé selon la revendication 9 ou 10, dans lequel le signal de référence est en outre basé sur une vitesse du vent (207).

12. Procédé selon l'une quelconque des revendications précédentes, dans lequel le fonctionnement de la turbine éolienne comprend en outre de fournir un signal de pas de pale à un actionneur (125) pour ajuster un angle de tangage d'une pale de rotor reliée au rotor.

13. Procédé selon l'une des revendications précédentes, comprenant en outre de faire fonctionner la turbine éolienne par la suite dans au moins l'un des modes suivantes :

un premier mode dans lequel la vitesse du vent se situe dans un premier intervalle (223) et dans lequel, en particulier, la vitesse de rotation est inférieure à une vitesse de rotation nominale (229), et dans lequel la puissance de rotor prévue est en particulier inférieure à une puissance de rotor nominale (217),

un deuxième mode dans lequel la vitesse du vent se situe dans un deuxième intervalle (225) comprenant une vitesse du vent plus élevée que le premier intervalle, et dans lequel en particulier la vitesse de rotation est à la vitesse de rotation nominale (229), et dans lequel, en particulier, la puissance de rotor prévue est inférieure à la puissance de rotor nominale (217), et

un troisième mode dans lequel la vitesse du vent se situe dans un troisième intervalle (227), comprenant une vitesse de vent plus élevée que le deuxième intervalle, et dans lequel, en particulier, la puissance de rotor prévue est à la puissance de rotor nominale (217).

14. Procédé selon la revendication 13, dans lequel l'angle de tangage est fixé pendant le premier mode, dans lequel l'angle de tangage est modifié, en particulier, en fonction de la puissance de rotor prévue et de la vitesse du vent pendant le deuxième mode, l'angle de tangage étant ajusté, en particulier, pour maintenir la puissance de rotor nominale pendant le troisième mode.

15. Agencement pour faire fonctionner une turbine éolienne (100) comportant un rotor (103), un générateur (107), un convertisseur de turbine éolienne (111) et une borne de sortie de turbine éolienne connectée à un réseau électrique, le convertisseur ayant une borne de sortie de convertisseur 115) en amont de la borne de sortie de turbine éolienne (117), l'agencement comprenant :

une borne d'entrée pour obtenir un premier signal d'entrée (138, 139, 211) lié à une sortie d'action de la turbine éolienne disponible au niveau d'un premier emplacement entre le rotor et la borne de sortie de convertisseur de turbine éolienne (115) ;
un processeur conçu pour mettre en oeuvre un procédé selon l'une des revendications précédentes.

FIG 1

FIG 2

**EP 2 639 448 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011204635 A